# EUROPEAN PATENT SPECIFICATION

(11) **EP 4 225 506 B1**
(45) Date of publication and mention of the grant of the patent: **07.01.2026**
(21) Application number: 20956485.5
(22) Date of filing: 09.10.2020
(51) Int. Cl.: B05B 9/08, B05B 12/00, F04B 17/06, F04B 23/02, F04B 49/02, F04B 49/06, F16L 33/04, F16L 33/22, A01M 7/00, B05B 1/30, B05B 15/40

(54) **BACKPACK SPRAYER**
RUCKSACKSPRÜHER
PULVÉRISATEUR DORSAL

(43) Date of publication of application: 16.08.2023
(73) Proprietor: Techtronic Cordless GP, Anderson, SC 29621 (US)
(72) Inventor: HE, Waifa, Dongguan, Guangdong (CN); WANG, Zhengjun, Dongguan, Guangdong (CN); BROWN, Hunter, Anderson, South Carolina 29621 (US); MITCHELL, Spencer, Anderson, South Carolina 29621 (US); LI, Qi, Dongguan, Guangdong (CN)
(74) Representative: Zimmermann & Partner Patentanwälte mbB
(86) International application number: PCT/CN2020/119882
(87) International publication number: WO 2022/073170

(56) References cited:
- WO-A1-2014/119130
- WO-A1-2019/187398
- CN-A- 103 586 157
- CN-A- 104 741 261
- CN-A- 104 741 261
- CN-A- 109 865 613
- CN-A- 110 169 411
- CN-U- 201 478 845
- CN-U- 208 535 401
- CN-U- 210 607 374
- JP-A- 2014 100 114
- JP-A- 2014 147 356
- RU-U1- 76 778
- US-A1- 2019 388 918

## Description

### TECHNICAL FIELD

The present disclosure generally relates to a battery-powered backpack sprayer, and more particularly to a portable fluid dispenser with improvements for minimizing the risk of fluid leakage and simplifying the adjustment control.

### BACKGROUND

Backpack sprayers are used for dispensing different fluids in a wide variety of applications. For example, the backpack sprayers can be used to dispense water, cleaning fluid, sanitizer, weed killer, pesticide, fertilizer, paint, and other fluid to an object or a surface. In general, the backpack sprayers are designed to be worn by the user by securing a tank of the sprayer against the user's back, such that the user can easily carry the tank of fluid from location to location. US 2019/388918 Al relates to a variable pressure sprayer.

A conventional electrical backpack sprayer includes a tank, a battery pack, a pump, a pressure controller on the outlet tube, and a dispensing nozzle. The battery pack is connected to the pump to power the pump, so the liquid in the tank flows through a conduit to the pump, and to the dispensing nozzle for spraying outwardly. The user can use the pressure controller to control the volume of liquid. As the user wears the electrical backpack sprayer with the battery pack, electrical circuits, and liquid tank mounted together, the water sealing and anti-moisture are essential for preventing electrical failure or leakage.

Furthermore, the backpack sprayer is carried on the back, and it is important to simplify the control and adjustment of the fluid flow and pressure. The pressure controller on the outlet tube is a trigger that can control the fluid projection speed, pressure, and spray pattern. For controlling the pump speed and actuating the power of the pump, a more convenient interface is required such that the user can actuate the pump and adjust the pump speed easily.

Accordingly, there is a need in the art for a battery powered backpack sprayer that seeks to address at least some of the above issues. Furthermore, other desirable features and characteristics will become apparent from the subsequent detailed description and the appended claims, taken in conjunction with the accompanying drawings and this background of the disclosure.

### SUMMARY OF THE INVENTION

Aspects and advantages of the invention will be set forth in part in the following summary, or may be obvious from the summary, or may be learned through practice of the invention. The invention is defined in the appended set of claims.

In accordance with certain embodiments of the present disclosure, a backpack sprayer is disclosed. The backpack sprayer comprises a housing with a bottom face and a dispensing assembly. The housing defines a fluid container, a battery compartment for receiving a battery, and a chamber for receiving a control assembly and a pump assembly. The dispensing assembly is configured to dispense fluid from the fluid container. The pump assembly is configured to pump the fluid from the fluid container to the dispensing assembly. The control assembly is configured to control the pump assembly. The battery compartment is positioned above the bottom face with a first height therebetween, and the control assembly is positioned above the bottom face with a second height therebetween.

The control assembly includes a rotatable dial, and the rotatable dial has a cam surface engaged by a follower for controlling on and off of the pump assembly.

The rotatable dial may comprise a coupler for coupling a rotatory movement of the rotatable dial to a rotary sensor.

Preferably, the rotary sensor is selected from a rheostat, a potentiometer, or an angular position sensor.

In accordance with the claimed invention, the cam surface comprises at least a first surface having a first radius and a second surface having a second radius different from the first radius; the follower moves to a first position when engaging the first surface and opens a switch of the pump assembly; and the follower moves to a second position when engaging the second surface and closes the switch of the pump assembly.

Preferably, the cam surface further comprises a transition surface between the first surface and the second surface.

Preferably, the transition surface achieves an abrupt transition between the first surface and the second surface.

Preferably, the follower is selected from a cantilever or a spring-loaded slider.

In accordance with a further aspect of the present disclosure, the dispensing assembly is in fluid communication with the pump assembly through a threaded connection, the threaded connection comprises a thread connector and a clamp mounted onto the thread connector preventing the thread connector from loosening.

Preferably, the thread connector comprises a plurality of circumferentially arranged protrusions or dents for engaging with a securing feature of the clamp.

Preferably, the securing feature comprises a bent tab.

Preferably, the clamp is a semi-circular tab with one or more mounting ends for mounting the clamp to the housing.

In accordance with a further aspect of the present disclosure, the bottom face comprises one or more drain holes.

In accordance with a further aspect of the present disclosure, the control assembly and the pump assembly are positioned on the opposite ends within the chamber.

In accordance with a further aspect of the present disclosure, the battery compartment comprises a bottom compartment wall lifted from the bottom face of the housing for the first height.

In accordance with a further aspect of the present disclosure, the battery compartment comprises a compartment door with at least an opening at a lower end of the compartment door.

In accordance with a further aspect of the present disclosure, the backpack fluid dispenser further comprising an electronic control unit positioned on top of the battery compartment.

In accordance with a further aspect of the present disclosure, the battery compartment comprises a socket for slidingly receiving a battery in a receiving direction; and contact means for establishing an electrical connection between the battery and the backpack fluid dispenser. The contact means are slidable within the socket along the receiving direction.

Preferably, a spring means is provided between the contact means and the socket to press the contact means against the battery.

Preferably, the contact means are slidable within the socket along to a first extent for electrical connection with a first battery of a first length, and to a second extent for electical connection with a second battery of a second length.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Other aspects and advantages of the present invention are disclosed as illustrated by the embodiments hereinafter.

### BRIEF DESCRIPTION OF THE DRAWINGS

The appended drawings contain figures to further illustrate and clarify the above and other aspects, advantages, and features of the present disclosure. It will be appreciated that these drawings depict only certain embodiments of the present disclosure and are not intended to limit its scope. It will also be appreciated that these drawings are illustrated for simplicity and clarity and have not necessarily been depicted to scale. The present disclosure will now be described and explained with additional specificity and detail through the use of the accompanying drawings in which:
FIG. **1** is a perspective view of a backpack sprayer in accordance with certain embodiments of the present disclosure;
FIG. **2** is a front view of the backpack sprayer of FIG. **1****;**
FIG. **3** is a rear view of the backpack sprayer of FIG. **1****;**
FIG. **4** is a right view of the backpack sprayer of FIG. **1****;**
FIG. **5** is a left view of the backpack sprayer of FIG. **1****;**
FIG. **6** is a bottom view of the backpack sprayer of FIG. **1****;**
FIG. **7** is a top view of the backpack sprayer of FIG. **1****;**
FIG. **8** is a cross-sectional view of the filling port of the backpack sprayer of FIG. **1****;**
FIG. **9** is a perspective view of the battery compartment of the backpack sprayer of FIG. **1** when the cover is opened;
FIG. **10** is a bottom perspective view of the battery mounted to a slidable contact means of the backpack sprayer of FIG. **1****;**
FIG. **11** is a perspective view of an exemplary battery that can be inserted into the backpack sprayer of FIG. **1****;**
FIG. **12** is a perspective view of the dispensing assembly of the backpack sprayer of FIG. **1****;**
FIG. **13** is a side view of the trigger assembly of the dispensing assembly of FIG. **12****;**
FIG. **14** is a cross-sectional view of the trigger assembly of FIG. **13****;**
FIG. **15** is an exploded view of the trigger assembly of FIG. **13****;**
FIG. **16** is a perspective view of the locking member of the trigger assembly of FIG. **13****;**
FIG. **17** is a side view of the handle of the trigger assembly of FIG. **13****;**
FIG. **18** is an internal view of the control assembly of the backpack sprayer of FIG. **1****;**
FIG. **19** is an internal view of the cam surface of the rotatable dial engaged with the follower in the control assembly of FIG. **18****;**
FIG. **20** is an internal front view of the chamber under the fluid container showing the control assembly and the pump assembly of the backpack sprayer of FIG. **1****;**
FIG. **21** is an internal rear perspective view of the chamber under the fluid container showing the control assembly and the pump assembly of the backpack sprayer of FIG. **1****;**
FIG. **22** is a perspective view of the pump assembly of the backpack sprayer of FIG. **1****;**
FIG. **23** is an exploded view of the threaded connection connecting the pump assembly to the dispensing assembly of the backpack sprayer of FIG. **1****;** and
FIG. **24** is a cross-sectional front view of the threaded connection of the backpack sprayer of FIG. **1****.**

### DETAILED DESCRIPTION OF THE INVENTION

The following detailed description is merely exemplary in nature and is not intended to limit the disclosure or its application and/or uses. It should be appreciated that a vast number of variations exist. The detailed description will enable those of ordinary skilled in the art to implement an exemplary embodiment of the present disclosure without undue experimentation, and it is understood that various changes or modifications may be made in the function and structure described in the exemplary embodiment without departing from the scope of the present disclosure as set forth in the appended claims.

The benefits, advantages, solutions to problems, and any element(s) that may cause any benefit, advantage, or solution to occur or become more pronounced are not to be construed as a critical, required, or essential features or elements of any or all of the claims. The invention is defined solely by the appended claims.

Terms such as "upper", "lower", "inner". "outer", "front", "rear", "top", "bottom", "left", "right", and variations thereof are used herein for ease of description to explain the positioning of an element, or the positioning of one element relative to another element, and are not intended to be limiting to a specific orientation or position.

The term "fluid communication" or variations thereof is used to refer to the ability of fluid to move from one part, element, or component to another.

The present disclosure relates to a structure of a backpack sprayer or a fluid dispenser, which is generally designated as **100.** More specifically, but without limitation, the present disclosure provides a battery-powered backpack sprayer for dispersing fluid with improvements for minimizing the risk of fluid leakage and simplifying the adjustment control. One having ordinary skill in the art would understand that the current disclosure is also applicable to different battery-operated devices with a fluid pump.

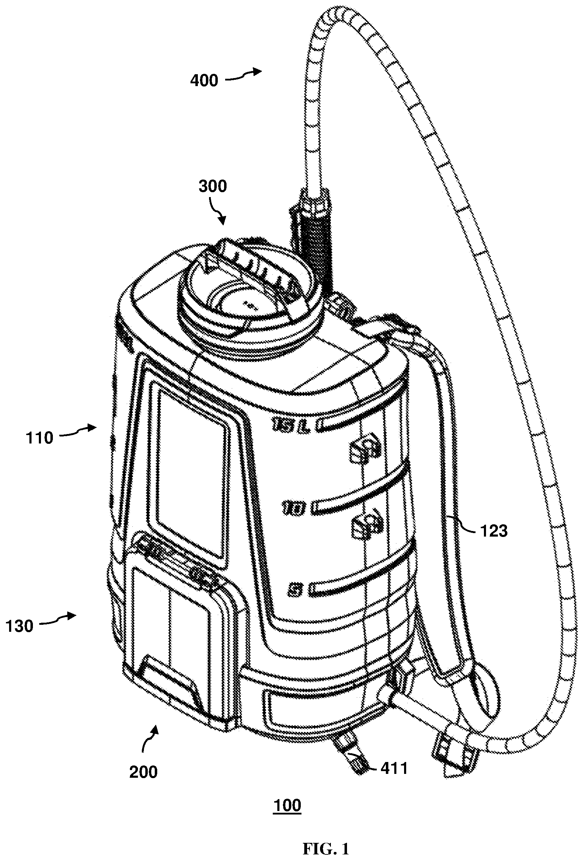

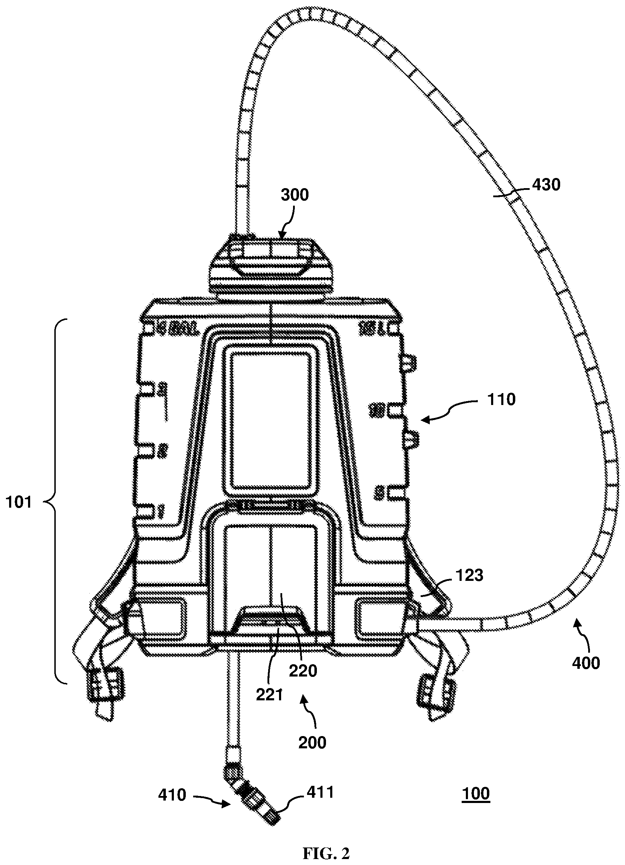

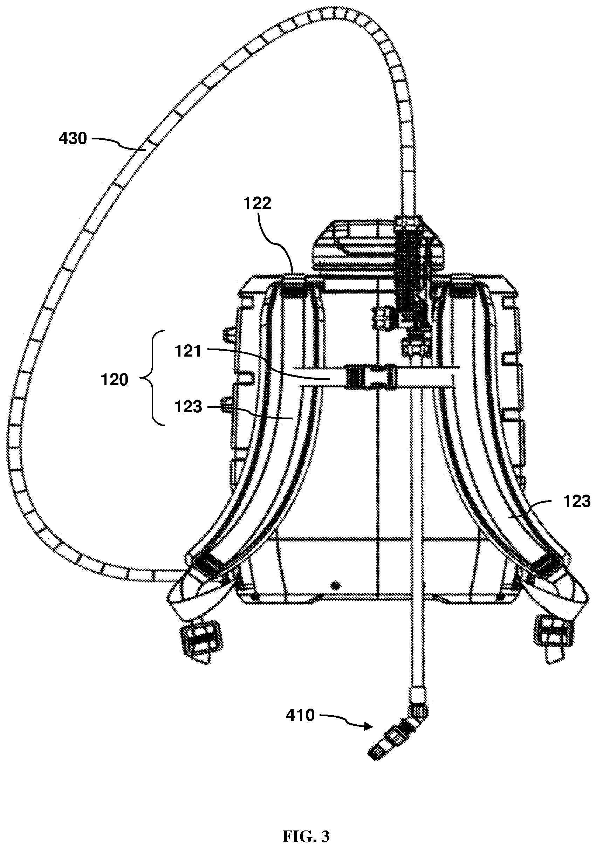

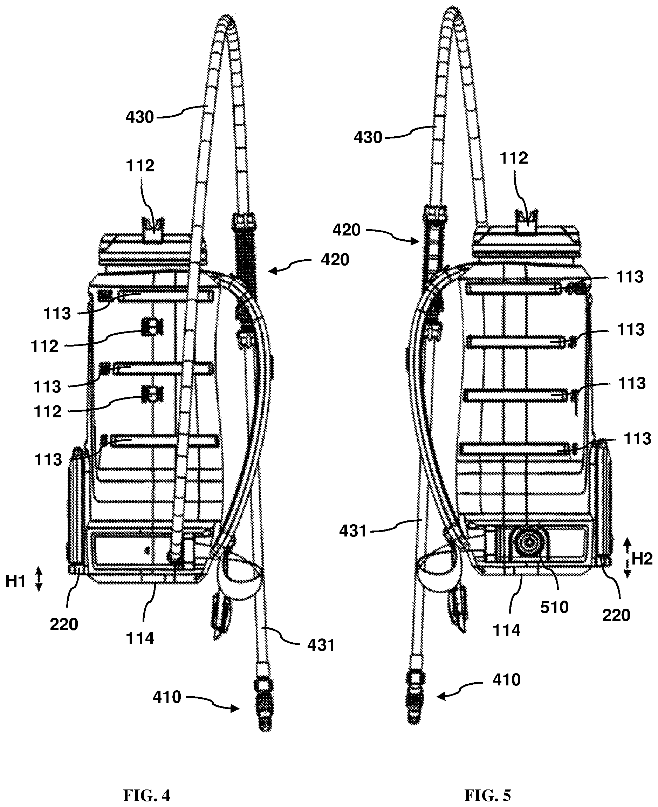

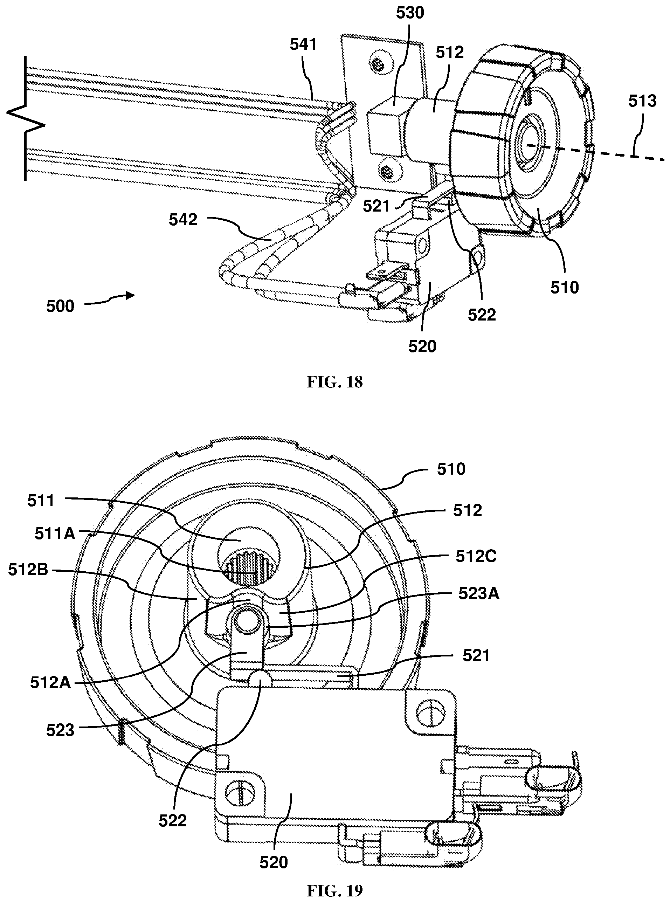

With reference to FIGS. **1-5****,** there is provided a backpack sprayer **100** comprising a housing **101** and a dispensing assembly **400.** The housing defines a fluid container **110,** a battery compartment **200,** and a chamber **130** for receiving a control assembly **500** and a pump assembly **600** (shown in FIG. **19**). In certain embodiments, the fluid container **110** is a storage tank mounted above the chamber **130** for carrying water or other liquid chemicals for dispensing, such as cleaning fluid, sanitizer, weed killer, pesticide, fertilizer, paint, and other fluid. The fluid container **110** may be constructed using light weight and durable materials which show excellent resistance to a wide range of chemicals, such as synthetic resin and polyester resin. In certain embodiments, the fluid container **110** is transparent or semi-transparent, and on the sidewalls of the fluid container **110,** a plurality of volume indicators **113** are provided to indicate the amount of fluid contained in the fluid container **110.** The volume indicators **113** may indicate the lever in gallons, liters, or other desirable measuring units.

The dispensing assembly **400** is in fluid communication with the fluid container **110** by connecting a hose **430** thereto for dispensing the fluid from the fluid container **110.** As illustrated in the figures, the dispensing assembly **400** can be mounted onto the housing **101** by attaching the dispensing assembly **400** to the one or more hose clamps **112.** The hose clamp **112** can have any shapes, such as rectangular, round, oval, or other shapes with a cavity sufficient for gripping the hose **430** and securing it thereon.

A support assembly **120** is used for supporting and securing the backpack sprayer **100** on the user's back, such that the user can easily carry from location to location. For this purpose, the support assembly **120** includes one or more shoulder straps **123** secured to the housing **101.** As shown in the illustrated embodiment, each shoulder strap **123** is attached to the strap harnesses **122** at locations on the upper face and on the sidewalls of the housing **101.** It is apparent that the shoulder strap **123** may be attached to any number of strap harnesses **122,** which may be formed integrally and molded as a part of the housing **101.** Alternatively, the strap harness **122** may also be glued, bonded, or fastened to the housing **101.** The support assembly **120** further comprises a sternum strap **121** attached to the two shoulder straps **123** across the chest of the user, thus the sternum strap **121** can keep the backpack sprayer **100** tightly in place and prevent the shoulder straps **123** from sliding off the shoulders of the user.

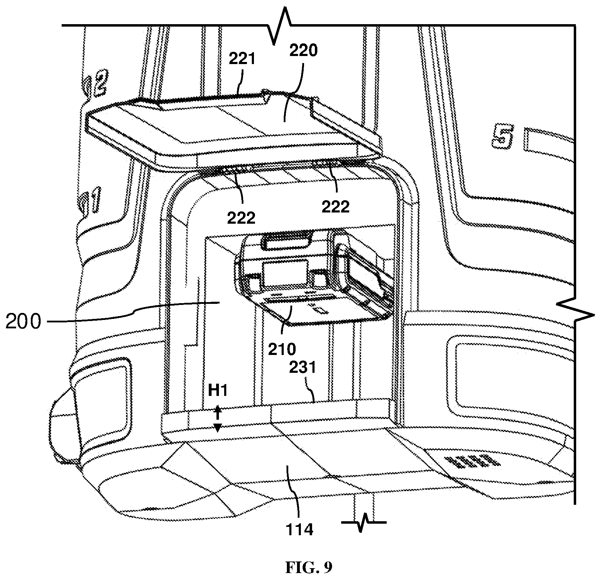

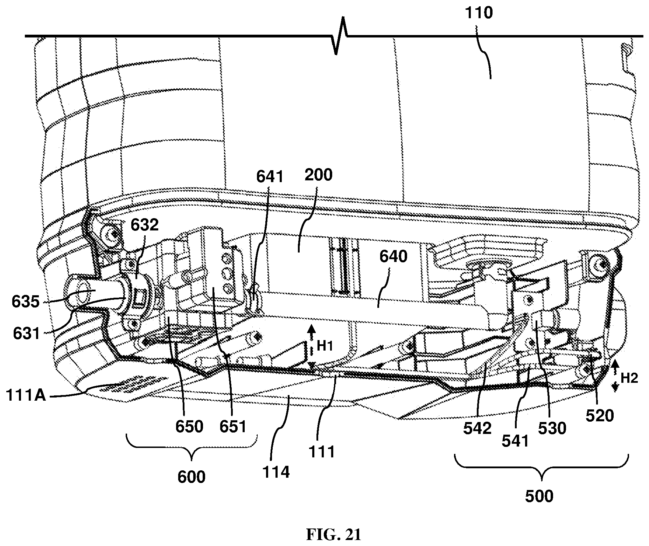

The battery compartment **200** receives one or more batteries **210** (shown in FIG. **9**) as the power source of the backpack sprayer **100,** and is positioned above the bottom face **114** with a first height **H1** therebetween. As better illustrated in FIG. **21****,** the height **H1** is provided such that in case of leakage of fluid, for instance from the fluid container **110,** the pump assembly **600,** or the conduits **640,** the leaked liquid can flow to the bottom face **114** and get drained before accumulating to height **H1** and enters the battery compartment **200**. As such, the need to provide a water proof battery compartment **200** can be dispensed with. The control assembly **500** comprises a rotatable dial **510** and is configured to control the pump assembly **600.** The control assembly **500** is positioned above the bottom face **114** with a second height **H2** therebetween. Likewise, the height **H2** is provided such that in case of leakage of fluid, for instance from the fluid container **110,** the pump assembly **600,** or the conduits **640,** the leaked liquid can flow to the bottom face **114** and get drained before accumulating to height **H2** and reaches the electronic circuitries of the control assembly **500.** As such, the need to provide a water proof control assembly **500** can be dispensed with. The pump assembly **600** is configured to pump the fluid from the fluid container **110** to the dispensing assembly **400** for fluid dispensing.

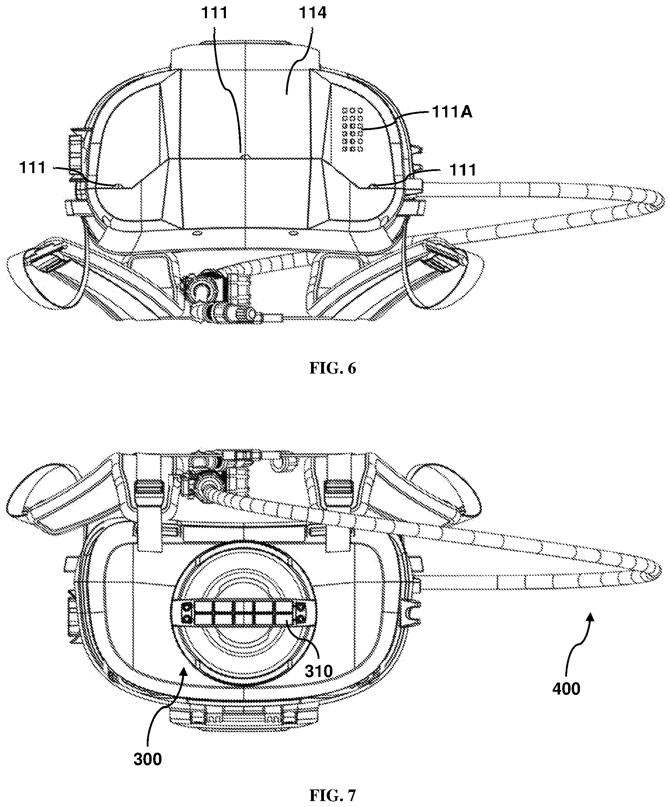

Referring to FIG. **6****,** the bottom face **114** of the housing **101** comprises one or more drain holes **111**, which are arranged to allow potential fluid leaked from the fluid container **110** or the pump assembly **600** to exit the housing **101**. In particular, the one or more drain holes **111** are positioned to allow the fluid dripping to the ground instead of dripping onto the user. There is a matrix of drain holes **111A** under the pump assembly **600** for preventing any fluid accumulation within the housing **101.**

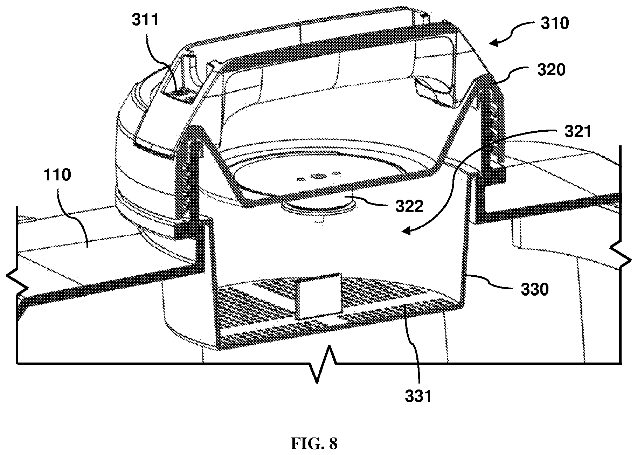

The fluid container **110** can be filled through the filling port **300.** In the illustrated embodiment in FIG. **7****,** the filling port **300** is positioned above the fluid container **110**, and it is apparent that the filling port **300** may also be positioned at any sidewalls of the fluid container **110.** Referring to the cross-sectional view of the filling port **300** in FIG. **8****,** it is adapted to prevent fluid leakage from above when the lid **320** is closed. The lid **320** comprises a lid handle **310** fixed to the lid **320** using one or more screws **311,** fasteners, bolts, or other fastening means. The lid **320** is a screw cap that can be installed atop the fluid container **110** for sealing the opening **321** and preventing leakage of the fluid from the opening **321.** In certain embodiments, the lid **320** may comprise a check valve **322** that is installed into the lid **320.** The check valve **322** allows air to flow into the fluid container **110** to balance the pressure therein as fluid is drawn from the fluid container **10.** On the other hand, the check valve **322** prevents fluid from leaking out as the backpack sprayer **100** is tilted. The check valve **322** can be selected from a duckbill valve, an umbrella valve or other suitable valves. Covering the opening **321,** there is provided an inlet filter **330** in certain embodiments. The inlet filter **330** has pores **331** of predetermined pore size installed on the opening **321** of the fluid container **110.** In certain embodiments, the handle **310** may be formed integrally in the lid **320,** and the lid **320** may be mounted onto the filling port **300** by other fastening means.

As shown in FIG. **9****,** the battery compartment **200** for receiving a battery **210,** comprises a compartment door **220** pivotally mounted to the door pivots **222** and connected to one side of the battery compartment **200,** such that the battery compartment **200** may be opened or closed from the lower end by lifting the compartment door **220,** as exemplarily illustrated. Alternatively, the battery compartment **200** may be opened from either the left or right side, or from the upper side. The compartment door **220** is used to prevent the battery **210** from being exposed to the outside and protecting the battery **210** from accidental damage. In certain embodiments, the compartment door **220** has at least an opening **221** at a lower end of the compartment door **220.** In case any fluid is leaked to the battery compartment **200,** the fluid can be dripped out from the opening **221.** The battery compartment **200** comprises a bottom compartment wall **231** lifted from the bottom face **114** of the housing **101** for the first height **H1**. In certain embodiments, on the bottom compartment wall **231,** there is provided one or more drain holes **111** arranged to allow potential fluid leaked from the fluid container **110** or the pump assembly **600** to exit the battery compartment **200,** and minimize any moisture built inside the battery compartment **200.**

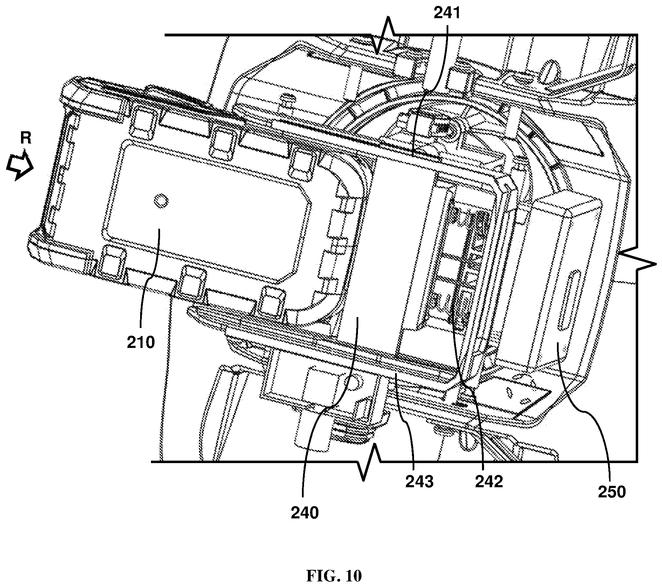

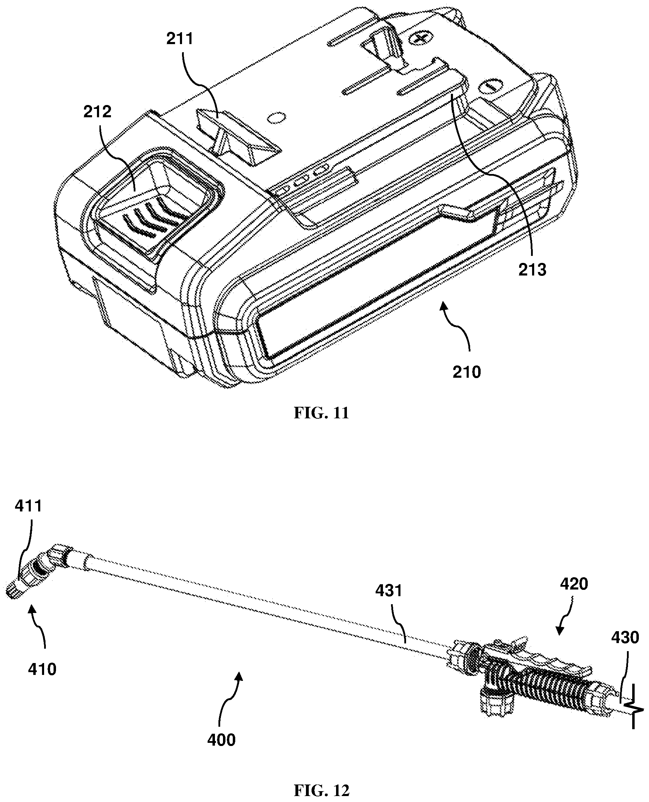

In certain embodiments, as shown in FIG. **10****,** the battery compartment **200** comprises a socket **243** for slidingly receiving a battery **210** in a receiving direction **R.** Contact means **240** are provided in the socket **243** for establishing an electrical connection between the battery **210** and the backpack fluid dispenser **100.** In certain embodiments, the contact means **240** is slidable within the socket **243** along the receiving direction **R.** The battery **210** is pressed against the contact means **240** when the battery **210** is slid into the socket **243.** The socket **243** comprises one or more grooves **241** for receiving the one or more guide rails **213** of the battery **210,** which is detailed in the perspective view of the battery **210** in FIG. **11****.** Therefore, when sliding the battery **210** into the socket **243,** the one or more guide rails **213** is aligned with the one or more grooves **241** of the socket **243** such that the battery **210** can be pressed into the socket **243** to complete electric connections with the contact means **240.** Spring means **242** are provided between the contact means **240** and the socket **243** to slide and press the contact means **240** against the battery **210.** The battery **210** comprises a latch **211** and a latch switch **212** coupled to the latch **211.** The latch **211** is adapted to mount the battery **210** to the socket **243.**

As the contact means **240** is slidable within the socket **243** along the receiving direction **R,** the backpack sprayer **100** of the present disclosure is compatiable with batteries of different capacities, and therefore different sizes and lengths. When a battery **210** is received in the socket **243,** the socket **243** receives the latch **211** of battery **210** always at the same location. Given that different batteries may have different lengths, the electical interface of a first battery and the electrical interface of a second battery may extend in the socket **243** to different extents. For example, the contact means **240** are slidable within the socket **243** along to a first extent for electrical connection with the first battery of a first length, and to a second extent for electrical connection with the second battery of a second length. The slidable contact means **240** makes sure the contact means **240** can slide along the socket **243** such that the electrical interface of the contact means **240** can always contact the electrical interface of the first battery or the second battery, thereby establishing electrical connection.

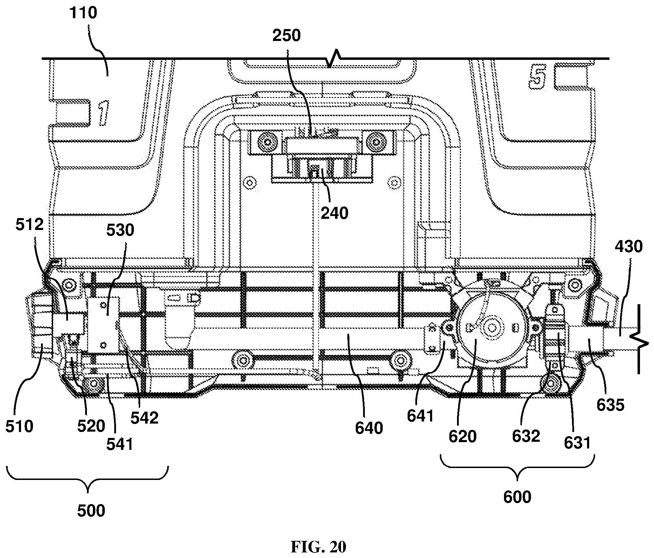

An electronic control unit **250** is positioned on top of the battery compartment **200,** which is away from the bottom compartment wall **231** to avoid any impact to the electronic control unit **250** in case of fluid leakage. This is shown in FIG. **20****.** In certain embodiments, the electronic control unit **250** may provide indicators to indicate the status of the battery **210,** the pump speed, the operation mode, or other information. In certain embodiments, the electronic control unit **250** further includes a power switch and a pressure switch. However, when operating the backpack sprayer **100,** the housing **101** is worn by the user at the back. As a result, it is inconvenient and impracticable for the user to adjust the power switch and the pressure switch directly. A control interface **500** that is accessible by the user when operating the backpack sprayer **100** is needed, and desirably, the control interface **500** should allow the user to control both the power and the flow volume of the pump assembly **600** conveniently.

Referring to FIG. **12****,** the dispensing assembly **400** comprises a hose **430,** a wand **431,** a nozzle **410** connected to the wand **431,** and a trigger assembly **420** connected between the wand **431** and the hose **430.** The nozzle **410** has a nozzle tip **411** adjustable to control the size of the outlet orifice for changing the spray pattern.

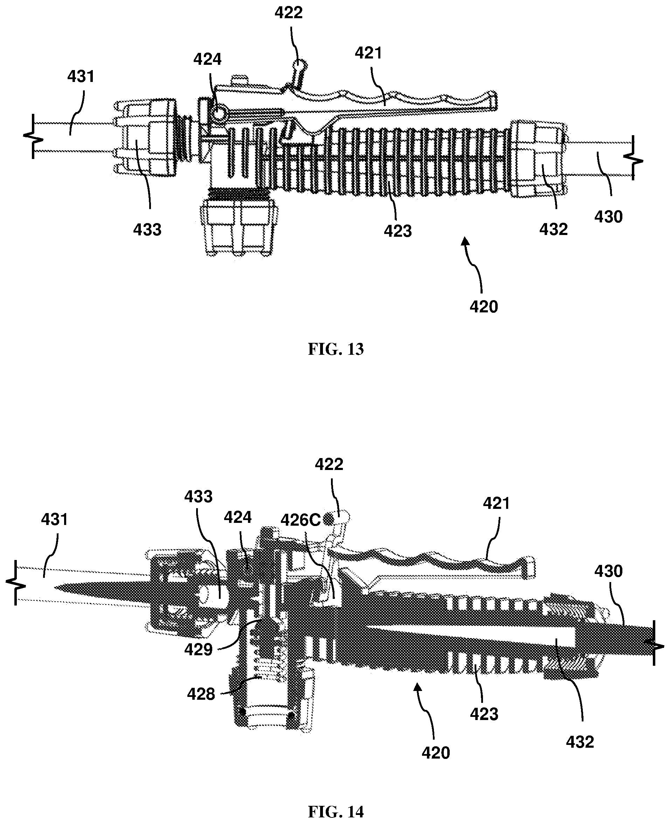

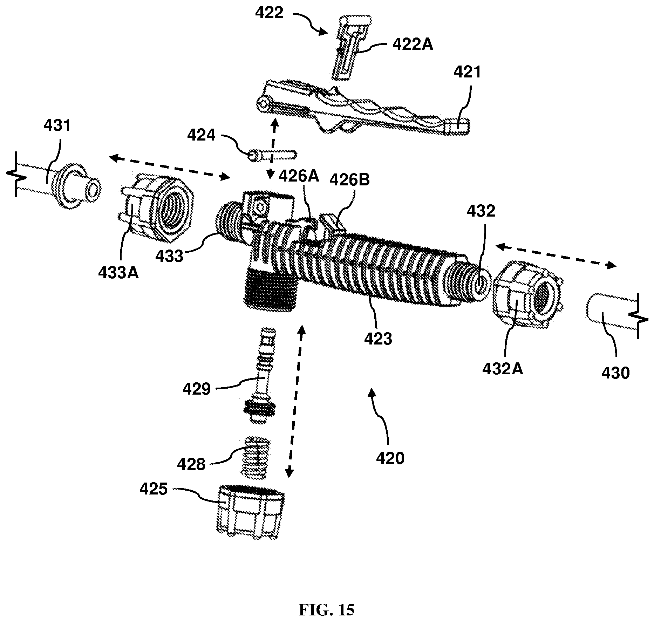

As shown in FIGS. **13-15****,** the trigger assembly **420** comprising a plunger **429,** a handle **423,** a trigger **421** coupled to the plunger **429,** a locking member **422,** an inlet thread **432A,** an outlet thread **433A,** and a spring **428.** The trigger **421** is pivoted about a pin **424** for controlling the vertical position of the plunger **429,** which is engaged to control a projection speed of the fluid passing through the trigger assembly **420.** The spring **428** surrounds at least part of the plunger **429** at one end. On the other end, the spring **428** can be abutted and compressed against the end cap **425** for providing a torsion force pushing the plunger **429** up. The trigger assembly **420** is engaged to the hose **430** by the inlet thread **432A,** and on the other end, connected to the wand **431** by the outlet thread **433A.** When the plunger **429** is opened, the inlet area **432** is in fluid communication with the nozzle area **433,** thereby the fluid from the fluid container **110** flows across the trigger assembly **420** for dispensing from the nozzle **410.** Likewise, when the plunger **429** is closed, the inlet area **432** is separated from the nozzle area **433** and the fluid cannot be dispensed from the nozzle **410.**

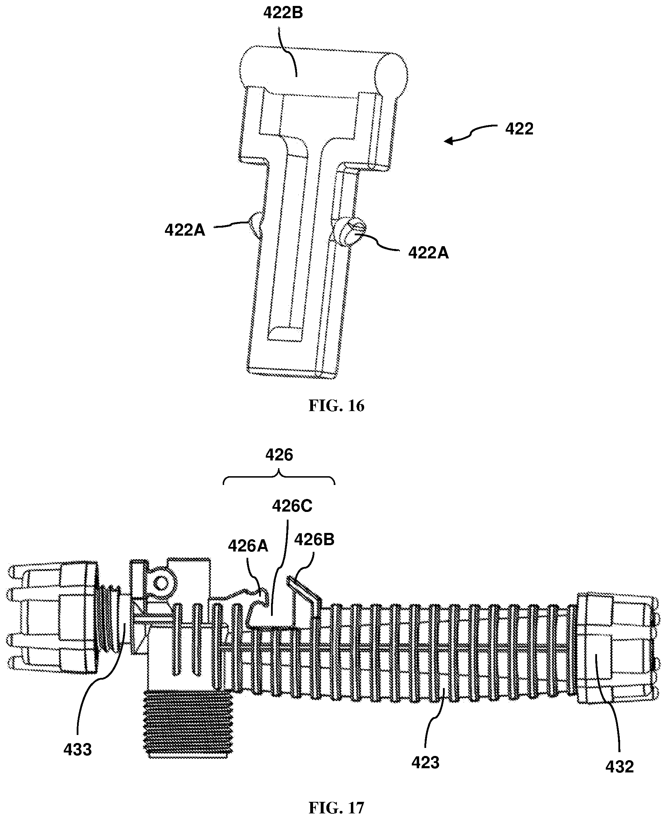

The locking member **422** is exemplarily shown in FIG. **16****,** comprising a horizontal end **422B** and a plurality of pivots **422A.** The locking member **422** is pivotably mounted onto the lock assembly **426** of the handle **423.** The lock assembly **426** is illustrated in FIG. **17****.** The locking member **422** can be pivoted across the cavity **426C** to a first tip **426A,** or to a second tip **426B.** When the locking member **422** is pivoted to the first tip **426A,** the trigger **421** is allowed to move for adjusting the projection speed. When the locking member **422** is pivoted to the second tip **426B,** the trigger **421** is prohibited from moving for fixing the projection speed. Therefore, the user can fix the project speed constant throughout using the locking member **422.**

On the lower end of the housing **101,** there is provided the chamber **130** for receiving the control assembly **500** and the pump assembly **600.** The internal structure of the control assembly **500** is shown in FIG. **18****.** As discussed already, a control assembly **500** that is accessible by the user when operating the backpack sprayer **100** is needed. The control assembly **500** comprises a rotatable dial **510,** a rotary sensor **530,** and a switch **520.** The rotatable dial **510** is positioned on a sidewall of the housing **101** for the user to turn. The rotatable dial **510** may have the shape of a wheel with a radial dimension sufficient for the user to hold onto, preferably with a knurled rim for providing a better grip as illustrated. In certain embodiments, the rotatable dial **510** may be provided in other shapes, such as a star shape, an octagonal shape, a cylinder shape, or a rectangular shape. The rotatable dial **510** can control the on and off of the pump assembly **600** by opening or closing the switch **520** of the pump assembly **600.** The rotatable dial **510** can also control a flow rate of the pump assembly **600.** A plurality of electric wires **541, 542** are connected from the rotary sensor **530** and the switch **520** respectively to the pump assembly **600** and battery compartment **200.**

Referring to FIG. **19****,** the rotatable dial **510** is rotatable around an axis **513** and comprises a coupler **511** and a cam surface **512** provided on the periphery of the coupler **511.** The coupler **511** can be a projection affixed to the rear side of the rotatable dial **510.** The rotatable dial **510** may have a larger radial dimension than the coupler **511.** The coupler **511** is configured to couple a rotatory movement of the rotatable dial **510** to a rotary sensor **530** for controlling a flow rate of the pump assembly **600.** In certain embodiments, the coupler **511** has a mounting hole with internal gear teeth **511A** for engaging the rotary sensor **530.** As another example, the coupler **511** may be connected to the rotary sensor **530** using fasteners, bolts, threads, or other attaching means (not shown). In certain embodiments, the rotary sensor **530** is selected from a rheostat, a potentiometer, an angular position sensor, or any other devices capable of varying resistance or a voltage level in an electrical circuit.

The cam surface **512** is provided around the coupler **511** and is engaged by a follower **523** for controlling on and off of the pump assembly **600.** The cam surface **512** comprises at least a first surface **512A** and a second surface **512B.** The first surface **512A** has a first radius, and the second surface **512B** has a second radius different from the first radius. The follower **523** follows the cam surface **512** and moves towards or away from the axis **513** when the rotatable dial **510** is rotated. In certain embodiments, the follower **523** moves to a first position when engaging the first surface **512A** and opens the switch **520** of the pump assembly **600,** thereby the pump assembly **600** is prohibited from operating. The follower **523** moves to a second position when engaging the second surface **512B** and closes the switch **520** of the pump assembly **600,** thereby the pump assembly **600** is allowed to operate. For the transition between the first surface **512A** and the second surface **512B,** the cam surface **512** further comprises a transition surface **512C.** In certain embodiments, the transition surface **512C** achieves an abrupt transition between the first surface **512A** and the second surface **512B,** so that the operator can clearly feel whether the follower **523** is at the first position or the second position.

In the illustrated embodiment, the follower **523** comprises a roller **523A** on a first end for engaging with the cam surface **512.** It is apparent that the follower **523** may alternatively comprise a ball bearing, a knife-edge, or other structures on the first end for contacting the cam surface **512.** On the second end, the follower **523** engages the actuator **522** of the switch **520** to closethe switch **520** or disengage the actuator **522** to open the switch **520.** Thereby the pump assembly **600** can be turned on or off. As shown in the illustrated embodiment, the follower **523** is connected to one end of a cantilever **521.** The other end of the cantilever can be fixed to the switch **520** or other structure. Alternatively, the follower **523** may be a spring-loaded slider or other suitable configuration (not shown). Therefore, a retention force pushes the follower **523** towards the cam surface **512.** For turning the rotatable dial **510** to turn on the pump assembly **600,** the user is required to overcome the retention force such that the follower **523** moves from the first surface **512A,** along the transition surface **512C** to the second surface **512B.** Likewise, for turning the rotatable dial **510** to turn off the pump assembly **600,** the user is required to turn the rotatable dial **510** such that the follower **523** moves from the second surface **512B,** and slides across the transition surface **512C** to the first surface **512A.**

Referring to FIGS. **20** and **21****,** the chamber **130** of the backpack sprayer **100** is illustrated. The chamber **130** is positioned under the fluid container **110,** and receives the control assembly **500** and the pump assembly **600.** The configuration keeps the center of gravity of the backpack sprayer **100** low. Although in the illustrated embodiment, the control assembly **500** is positioned on the left end of the chamber **130,** and the pump assembly **600** is positioned on the right end of the chamber **130,** it is apparent that the positions and orientations thereof may be otherwise. Preferably, the control assembly **500** and the pump assembly **600** are positioned on the opposite ends within the chamber **130.** The hose **430** of the dispensing assembly **400** is received by the chamber **130** and connected to the pump assembly **600.** In certain embodiments, the width of the chamber **130** may be shorter than the width of the fluid container **110,** such that the backpack sprayer **100** can be compact and lighter. The plurality of electric wires **541, 542** from the rotary sensor **530,** and the switch **520** are connected to the motor **620** of the pump assembly **600,** and the electronic control unit **250** of the battery compartment **200.** Electric wires are not connected out of the housing **101,** and so the dispensing assembly **400** does not have an electrical connection.

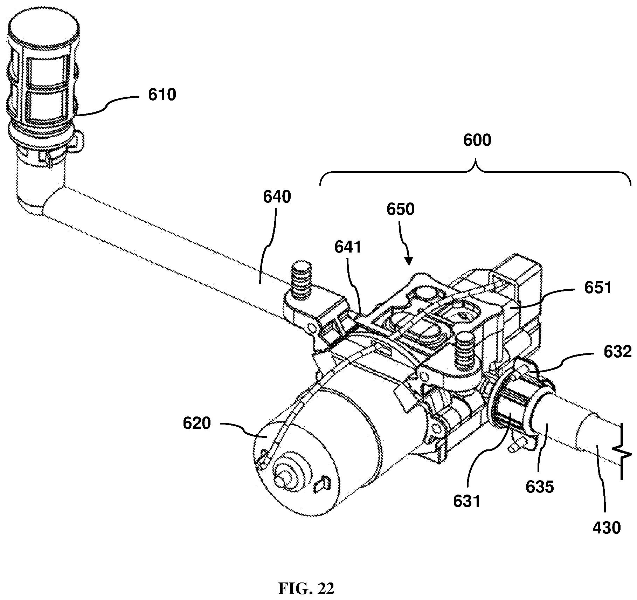

FIG. **22** shows the pump assembly **600** in accordance with certain embodiments of the present disclosure. The pump assembly **600** comprises one or more motors **620,** and a pump **650** driven by the motor **620.** The pump **650** is selected from a diaphragm pump, a vacuum pump, a centrifugal pump, a shuttle pump, a piston pump, a vane pump, or other hydraulic pumping devices known to those skilled in the art. The motor **620** can be any suitable electric motor selected from an alternating current (AC) motor, a brushed direct current (DC) motor, a brushless DC motor, a permanent magnet DC motor, and the like. For cooling down the pump assembly **600,** a fan **651** may be provided.

The fluid for dispensing out is stored in the fluid container **110,** and is in fluid communication with the pump assembly **600.** For facilitating the fluid communication to the pump assembly **600,** flow control devices such as valves, chokes, orifices, hydraulic connectors, and/or the like may be used. The pump assembly **600** may be connected to the fluid container **110** via any suitable numbers of liquid filters **610** and conduits **640.** When the pump **650** is actuated, the fluid from the fluid container **110** enters the conduit **640** through the liquid filter **610.** The pump **650** includes a pump inlet **641** and a pump outlet **635.** The pump assembly further comprises a fluid passageway across the pump **650** and in fluid communication with the pump inlet **641** and the pump outlet **635.** By electrically actuating the motor **620,** the pump **650** is actuated to receive the fluid flowing into the pump **650** at the pump inlet **641** and pump the fluid by adjusting the pressure and flow rate to the pump outlet **635.** The pressure and flow rate are adjusted by turning the rotatable dial **510** to adjust the value of the rotary sensor **530,** by employing the Bernoulli's principle. The pump outlet **635** is connected to a hose **430** so that the dispensing assembly **400** is in fluid communication with the pump assembly **600.**

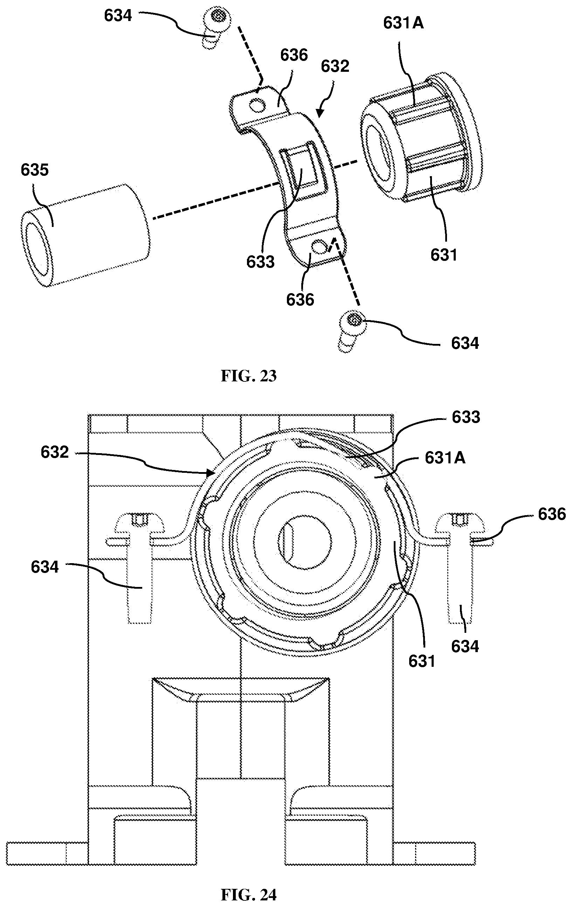

Advantageously, the present disclosure provides a threaded connection for securing the hose **430** to the pump outlet **635.** The threaded connection comprises a thread connector **631** and a clamp **632** mounted onto the thread connector **631** for preventing the thread connector **631** from loosening. The exploded view of the threaded connection is shown in FIG. **23****.**

The thread connector **631** comprises a seal, an internally threaded inner wall, and a plurality of circumferentially arranged protrusions or dents **631A.** The seal is a ring-shaped sealing element disposed within the thread connector **631.** The internally threaded inner wall allows the thread connector **631** to be mounted between the dispensing assembly **400** and the pump assembly **600.** The plurality of circumferentially arranged protrusions or dents **631A** engages with a securing feature of the clamp **632.** The clamp **632** is a semi-circular tab with a radial dimension close to the radial dimension of the thread connector **631**. Therefore, the clamp **632** can circumferentially cover part of the thread connector **631.** The clamp **632** further comprises one or more mounting ends **636** for mounting the clamp **632** to the housing **101** using screws **634,** bolts, rivets, clamps, or any other suitable fastening devices.

Referring to the cross-sectional view of the threaded connection **631** in FIG. **24****,** the securing feature of the clamp **632** comprises a bent tab **633.** The bent tab **633** is bent inwardly and engages with any one of the plurality of circumferentially arranged protrusions or dents **631A.** Therefore, the thread connector **631** can only be turned to further tighten the connection, but not towards the opposite direction for loosening the thread connector **631.**

This illustrates the fundamental structure and mechanism of the battery-powered backpack sprayer in accordance with the present disclosure. It is apparent that the present disclosure may be embodied in other types of fluid dispenser. The present embodiment is, therefore, to be considered in all respects as illustrative and not restrictive. The scope of the disclosure is indicated by the appended claims rather than by the preceding description.

## Claims

1. A backpack fluid dispenser, comprising:
• a housing (101), wherein the housing comprises a bottom face (114) and defines:
∘ a fluid container (110);
∘ a battery compartment (200) for receiving a battery (210); and
a chamber (130) for receiving a control assembly (500) and a pump assembly (600);
• and a dispensing assembly (400) for dispensing fluid from the fluid container,
wherein:
• the pump assembly (600) is configured to pump the fluid from the fluid container (110) to the dispensing assemblly (400);
• the control assembly (500) is configured to control the pump assembly (600);
• the battery compartment (200) is positioned above the bottom face (114) with a first height (H1) therebetween;
• the control assembly (500) is positioned above the bottom face (114) with a second height (H2) therebetween;
• the control assembly (500) comprises a rotatable dial (510), and the rotatable dial comprises a cam surface (512) engaged by a folllower (523);
• the cam surface comprises at least a first surface (512A) having a first radius and a second surface (512B) having a second radius different from the first radius;
• the follower (523) moves to a first position when engaging the first surface and opens a switch (520) of the pump assembly; and
• the follower moves to a second position when engaging the second surface and closes the switch of the pump assembly (600).

2. The backpack fluid dispenser of claim 1, wherein the follower (523) is selected from a cantilever (521) or a spring-loaded slider.

3. The backpack fluid dispenser of claim 1, wherein the rotatable dial comprises a coupler (511) for coupling a rotatory movement of the rotatable dial to a rotary sensor (530) optionally selected from a rheostat, a potentiometer, or an angular position sensor for controlling a flow rate of the pump assembly.

4. . The backpack fluid dispenser of claim 1, wherein the cam surface further comprises a transition surface (512C) between the first surface and the second surface, and optionally the transition surface achieves an abrupt transition between the first surface and the second surface.

5. . The backpack fluid dispenser of claim 1, wherein the dispensing assembly is in fluid communication with the pump assembly through a threaded connection, the threaded connection comprises a thread connector (631) and a clamp (632) mounted onto the thread connector preventing the thread connector from loosening.

6. . The backpack fluid dispenser of claim 5, wherein the thread connector comprises a plurality of circumferentially arranged protrusions or dents (631A) for engaging with a securing feature of the clamp, wherein the securing feature optionally comprises a bent tab (633).

7. . The backpack fluid dispenser of claim 5, wherein the clamp is a semi-circular tab with one or more mounting ends (636) for mounting the clamp to the housing.

8. . The backpack fluid dispenser of claim 1, wherein the bottom face comprises one or more drain holes.

9. . The backpack fluid dispenser of claim 1, wherein the control assembly and the pump assembly are positioned on the opposite ends within the chamber.

10. . The backpack fluid dispenser of claim 1 wherein the battery compartment comprises a bottom compartment wall (231) lifted from the bottom face of the housing for the first height.

11. . The backpack fluid dispenser of claim 1, wherein the battery compartment comprises a compartment door (220) with at least an opening (221) at a lower end of the compartment door.

12. . The backpack fluid dispenser of claim 1, further comprising an electronic control unit (250) positioned on top of the battery compartment.

13. . The backpack fluid dispenser of claim 1, wherein:
the battery compartment comprises a socket (243) for slidingly receiving a battery (210) in a receiving direction (R), and contact means (240) for establishing an electrical connection between the battery and the backpack fluid dispenser;
the contact means are slidable within the socket along the receiving direction; and
spring means (242) are optionally provided between the contact means and the socket to press the contact means against the battery.

14. . The backpack fluid dispenser of claim 13, wherein the contact means are slidable within the socket along to a first extent for electrical connection with a first battery of a first length, and to a second extent for electical connection with a second battery of a second length.

## Patentansprüche

1. Rucksackähnlich tragbarer Fluidspender, umfassend:
• ein Gehäuse (101), wobei das Gehäuse eine Bodenfläche (114) aufweist und Folgendes definiert:
▪ einen Fluidbehälter (110);
▪ ein Batteriefach (200) zum Aufnehmen einer Batterie (210); und
▪ eine Kammer (130) zum Aufnehmen einer Steuereinheit (500) und einer Pumpeneinheit (600);
• und eine Abgabeeinheit (400) zum Abgeben von Fluid aus dem Fluidbehälter,
wobei
• die Pumpeneinheit (600) dazu ausgelegt ist, das Fluid aus dem Fluidbehälter (110) zur Abgabeeinheit (400) zu pumpen;
• die Steuereinheit (500) dazu ausgelegt ist, die Pumpeneinheit (600) anzusteuern;
• das Batteriefach (200) oberhalb der Bodenfläche (114) mit einer dazwischen definierten ersten Höhe (H1) angeordnet ist;
• die Steuereinheit (500) oberhalb der Bodenfläche (114) mit einer dazwischen definierten zweiten Höhen (H2) angeordnet ist;
• die Steuereinheit (500) ein drehbares Einstellrad (510) umfasst und das drehbare Einstellrad eine Steuerkurvenfläche (512) aufweist, die mit einem Nachführglied (523) in Eingriff steht;
• die Steuerkurvenfläche zumindest eine erste Fläche (512A) mit einem ersten Radius und eine zweite Fläche (512B) mit einem zweiten Radius aufweist, der vom ersten Radius verschieden ist;
• das Nachführglied (523) sich bei Eingriff mit der ersten Fläche in eine erste Position bewegt und einen Schalter (520) der Pumpeneinheit öffnet; und
• das Nachführglied sich bei Eingriff mit der zweiten Fläche in eine zweite Position bewegt und den Schalter der Pumpeneinheit (600) schließt.

2. Rucksackähnlich tragbarer Fluidspender nach Anspruch 1,
wobei das Nachführglied (523) entweder ein Kragarm (521) oder ein federbelasteter Schieber ist.

3. Rucksackähnlich tragbarer Fluidspender nach Anspruch 1,
wobei das drehbare Einstellrad einen Koppler (511) zur Kopplung einer Drehbewegung des drehbaren Einstellrads mit einem Drehsensor (530) aufweist, der optional aus einem Rheostat, einem Potentiometer oder einem Winkelpositionssensor zur Steuerung des Durchflusses der Pumpeneinheit ausgewählt ist.

4. Rucksackähnlich tragbarer Fluidspender nach Anspruch 1,
wobei die Steuerkurvenfläche ferner eine Übergangsfläche (512C) zwischen der ersten Fläche und der zweiten Fläche aufweist, wobei die Übergangsfläche optional einen abrupten Übergang zwischen der ersten Fläche und der zweiten Fläche bewirkt.

5. Rucksackähnlich tragbarer Fluidspender nach Anspruch 1,
wobei die Abgabeeinheit über eine Gewindeverbindung mit der Pumpeneinheit in Strömungsverbindung steht, wobei die Gewindeverbindung einen Gewindeanschluss (631) und eine am Gewindeanschluss angebrachte Klemme (632) umfasst, die ein Lösen des Gewindeanschlusses verhindert.

6. Rucksackähnlich tragbarer Fluidspender nach Anspruch 5,
wobei der Gewindeanschluss mehrere umlaufend angeordnete Vorsprünge oder Ausnehmungen (631A) zum Eingriff mit einem Sicherungselement der Klemme aufweist, wobei das Sicherungselement optional eine umgebogene Lasche (633) umfasst.

7. Rucksackähnlich tragbarer Fluidspender nach Anspruch 5,
wobei die Klemme eine halbkreisförmige Lasche mit einem oder mehreren Befestigungsenden (636) zum Anbringen der Klemme am Gehäuse ist.

8. Rucksackähnlich tragbarer Fluidspender nach Anspruch 1,
wobei die Bodenfläche eine oder mehrere Ablauflochungen aufweist.

9. Rucksackähnlich tragbarer Fluidspender nach Anspruch 1,
wobei die Steuereinheit und die Pumpeneinheit an gegenüberliegenden Enden innerhalb der Kammer angeordnet sind.

10. Rucksackähnlich tragbarer Fluidspender nach Anspruch 1,
wobei das Batteriefach eine Batteriefachbodenwand (231) aufweist, die sich von der Bodenfläche des Gehäuses über die erste Höhe erhebt.

11. Rucksackähnlich tragbarer Fluidspender nach Anspruch 1,
wobei das Batteriefach eine Batteriefachklappe (220) mit zumindest einer Öffnung (221) an einem unteren Ende der Batteriefachklappe aufweist.

12. Rucksackähnlich tragbarer Fluidspender nach Anspruch 1,
ferner umfassend eine elektronische Steuereinheit (250), die über dem Batteriefach angeordnet ist.

13. Rucksackähnlich tragbarer Fluidspender nach Anspruch 1,
wobei das Batteriefach eine Aufnahme (243) aufweist, um eine Batterie (210) in Aufnahmerichtung (R) verschiebbar aufzunehmen, sowie Kontaktmittel (240) zur Herstellung einer elektrischen Verbindung zwischen der Batterie und dem Fluidspender;
wobei die Kontaktmittel in der Aufnahme in Aufnahmerichtung verschiebbar sind; und
wobei optional Federmittel (242) zwischen den Kontaktmitteln und der Aufnahme vorgesehen sind, um die Kontaktmittel an die Batterie zu drücken.

14. Rucksackähnlich tragbarer Fluidspender nach Anspruch 13,
wobei die Kontaktmittel innerhalb der Aufnahme über eine erste Entfernung zum elektrischen Anschluss an eine erste Batterie mit einer ersten Länge und über eine zweite Entfernung zum elektrischen Anschluss an eine zweite Batterie mit einer zweiten Länge verschiebbar sind.

## Revendications

1. Distributeur de fluide portable de type sac à dos, comprenant :
• un boîtier (101), le boîtier présentant une face inférieure (114) et définissant :
▪ un réservoir de fluide (110) ;
▪ un compartiment à batterie (200) destiné à recevoir une batterie (210) ; et
▪ une chambre (130) destinée à recevoir un ensemble de commande (500) et un ensemble de pompe (600) ;
• et un ensemble de distribution (400) pour distribuer le fluide contenu dans le réservoir,
dans lequel
• l'ensemble de pompe (600) est conçu pour pomper le fluide du réservoir (110) vers l'ensemble de distribution (400) ;
• l'ensemble de commande (500) est conçu pour commander l'ensemble de pompe (600) ;
• le compartiment à batterie (200) est positionné au-dessus de la face inférieure (114) à une première hauteur (H1) définie entre eux ;
• l'ensemble de commande (500) est positionné au-dessus de la face inférieure (114) à une seconde hauteur (H2) définie entre eux ;
• l'ensemble de commande (500) comprend un bouton de réglage rotatif (510), le bouton de réglage rotatif présentant une surface de came (512) en prise avec un suiveur (523) ;
• la surface de came présente au moins une première surface (512A) de premier rayon et une seconde surface (512B) de second rayon différent du premier rayon ;
• lorsque le suiveur (523) est en prise avec la première surface, il se déplace vers une première position et ouvre un interrupteur (520) de l'ensemble de pompe ; et
• lorsque le suiveur est en prise avec la seconde surface, il se déplace vers une seconde position et ferme l'interrupteur de l'ensemble de pompe (600).

2. Distributeur de fluide portable de type sac à dos selon la revendication 1, dans lequel le suiveur (523) est soit un bras en porte-à-faux (521), soit un curseur chargé par ressort.

3. Distributeur de fluide portable de type sac à dos selon la revendication 1, dans lequel le bouton de réglage rotatif comprend un coupleur (511) permettant de coupler le mouvement de rotation du bouton de réglage rotatif à un capteur de rotation (530), choisi en option parmi un rhéostat, un potentiomètre ou un capteur de position angulaire, afin de contrôler le débit de l'ensemble de pompe.

4. Distributeur de fluide portable de type sac à dos selon la revendication 1, dans lequel la surface de came présente en outre une surface de transition (512C) entre la première surface et la seconde surface, et, en option, la surface de transition assure une transition abrupte entre la première surface et la seconde surface.

5. Distributeur de fluide portable de type sac à dos selon la revendication 1, dans lequel l'ensemble de distribution est en communication fluidique avec l'ensemble de pompe par un raccord fileté, le raccord fileté comprenant un connecteur fileté (631) et un collier (632) monté sur le connecteur fileté pour empêcher le desserrage du connecteur fileté.

6. Distributeur de fluide portable de type sac à dos selon la revendication 5, dans lequel le connecteur fileté comprend une pluralité de protubérances ou de creux (631A) disposés circonférentiellement pour venir en prise avec un élément de fixation du collier, l'élément de fixation comprenant en option une languette coudée (633).

7. Distributeur de fluide portable de type sac à dos selon la revendication 5, dans lequel le collier est une languette semi-circulaire munie d'une ou plusieurs extrémités de fixation (636) permettant de fixer le collier au boîtier.

8. Distributeur de fluide portable de type sac à dos selon la revendication 1, dans lequel la face inférieure présente un ou plusieurs trous de drainage.

9. Distributeur de fluide portable de type sac à dos selon la revendication 1, dans lequel l'ensemble de commande et l'ensemble de pompe sont positionnés aux extrémités opposées à l'intérieur de la chambre.

10. Distributeur de fluide portable de type sac à dos selon la revendication 1, dans lequel le compartiment à batterie comprend une paroi inférieure (231) surélevée de la première hauteur par rapport à la face inférieure du boîtier.

11. Distributeur de fluide portable de type sac à dos selon la revendication 1, dans lequel le compartiment à batterie comprend un volet (220) muni d'au moins une ouverture (221) à une extrémité inférieure du volet du compartiment.

12. Distributeur de fluide portable de type sac à dos selon la revendication 1, comprenant en outre une unité de commande électronique (250) positionnée au-dessus du compartiment à batterie.

13. Distributeur de fluide portable de type sac à dos selon la revendication 1, dans lequel
le compartiment à batterie comprend un logement (243) destiné à recevoir une batterie (210) coulissante en direction de réception (R), et des moyens de contact (240) assurant la connexion électrique entre la batterie et le distributeur de fluide ;
les moyens de contact peuvent coulisser dans le logement en direction de réception ; et
en option, des moyens formant ressorts (242) sont disposés entre les moyens de contact et le logement pour pousser les moyens de contact contre la batterie.

14. Distributeur de fluide portable de type sac à dos selon la revendication 13,
dans lequel les moyens de contact peuvent coulisser dans le logement sur une première distance pour la connexion électrique avec une première batterie de première longueur, et sur une seconde distance pour la connexion électrique avec une seconde batterie de seconde longueur.
